# EUROPEAN PATENT SPECIFICATION

(11) **EP 2 692 621 B1**
(45) Date of publication and mention of the grant of the patent: **24.09.2014**
(21) Application number: 13178723.6
(22) Date of filing: 31.07.2013
(51) Int. Cl.: B62K 11/00

(54) **Saddle type vehicle**
Motorrad
Véhicule à selle

(30) Priority: 03.08.2012 JP 2012173330
(43) Date of publication of application: 05.02.2014
(73) Proprietor: Yamaha Hatsudoki Kabushiki Kaisha, Iwata-shi, Shizuoka 438-8501 (JP)
(72) Inventor: Ishihara, Eiki, Iwata-shi, Shizuoka 438-0026 (JP)
(74) Representative: Grünecker, Kinkeldey, Stockmair & Schwanhäusser

(56) References cited:
- WO-A1-03/004340
- JP-A- 2011 006 028
- US-A1- 2010 032 225

## Description

The present invention relates to a saddle type vehicle **according to the preamble of independent claim 1**.

JP 2011-006028 A discloses a motorcycle as an example of **such** a saddle type vehicle. In this motorcycle, electrical components are disposed over an engine and, accordingly, likely to be thermally influenced by the engine.

Further, in JP 2011-006028 A, the electrical components are disposed between a fuel tank and a vehicle body frame in the up-down direction, and the electrical components overlap the fuel tank in a side view. It is therefore necessary to recess upward the bottom surface of the fuel tank and provide a space to be used for disposing the electrical components between the fuel tank and the vehicle body frame. In addition, since the electrical components are thus covered with the fuel tank, it is not easy to access the electrical components, resulting in poor maintainability.

It is an object of the present invention to provide a saddle type vehicle including an electrical component unit less likely to be thermally influenced by an engine and having high maintainability. According to the present invention, said object is solved by a saddle type vehicle having the features of independent claim 1. Preferred embodiments are laid down in the dependent claims.

An aspect of the present teaching provides a saddle type vehicle including a head pipe, a main frame extending rearward from the head pipe, a pair of left and right seat frames extending rearward from the main frame, a cross member connecting the pair of seat frames to each other and at least a portion of the cross member disposed at a position higher than those of the pair of seat frames, an engine including a cylinder head disposed at a position lower than those of the main frame and the pair of seat frames, an air cleaner disposed at the rear of the cylinder head and below the pair of seat frames, a fuel tank including a hollow tank portion arranged to store fuel therein, the fuel tank disposed over the pair of seat frames, the fuel tank supported on the cross member, and an electrical component unit disposed, in a plan view of the vehicle, between a front end portion of the air cleaner and a rear end portion of the cross member in the front-rear direction and at least a portion of the electrical component unit disposed, in a side view of the vehicle, between the tank portion and the pair of seat frames in the up-down direction.

According to this arrangement, at least a portion of the electrical component unit is disposed, in the side view of the vehicle, between the tank portion and the pair of seat frames in the up-down direction. The air cleaner is disposed below the pair of seat frames. The electrical component unit is accordingly disposed between the air cleaner and the fuel tank in the up-down direction. The space between the air cleaner and the fuel tank is thermally insulated so as to be less likely to be thermally influenced by the engine. Further, since air to be supplied to the engine flows through the air cleaner, the air cleaner has a relatively low temperature. For these reasons, the electrical component unit is less likely to be thermally influenced by the engine.

On the other hand, in such a conventional saddle type vehicle as disclosed in JP 2011-006028 A, electrical components are disposed over the cylinder head and thereby likely to be thermally influenced by the engine. Further, such a conventional saddle type vehicle is considered not to have a space to be used for disposing the electrical components between the air cleaner and the fuel tank. It is therefore impossible for such a conventional saddle type vehicle to dispose the electrical components between the air cleaner and the fuel tank. Accordingly, the electrical components of the conventional saddle type vehicle are considered likely to be thermally influenced by the engine.

Moreover, according to the aspect of the present teaching, the cross member is formed such that a space to be used for disposing the electrical component unit is set between the air cleaner and the fuel tank. With this space, not only disposing the electrical component unit but also high maintainability for lateral access by a user or a mechanic is provided. That is, being provided with a (disposing) space with high maintainability means that there is a vertical clearance between the fuel tank and the seat frames. This allows users, etc., to perform maintenance of the fuel tank and the electrical component unit easily through the space. The saddle type vehicle according to the aspect of the present teaching can thus have not only a reduced thermal influence on the electrical component unit but also improved maintainability.

In an aspect of the present teaching, the saddle type vehicle may further include a seat overlapping the electrical component unit in the side view of the vehicle, the seat mountable and dismountable onto/from the pair of seat frames.

According to this arrangement, at least a portion of the seat is disposed laterally to the electrical component unit and, in the side view of the vehicle, overlaps the electrical component unit. That is, when the seat is mounted on the pair of seat frames, the electrical component unit is hidden by the seat so as not to be visible. The seat is mountable and dismountable onto/from the pair of seat frames. When users, etc., dismount the seat, the electrical component unit is opened and exposed laterally. This allows the users, etc., to see the electrical component unit. The users, etc., can thus perform maintenance of the electrical component unit easily by dismounting the seat.

In an aspect of the present teaching, at least a portion of the electrical component unit may be disposed in front of the cross member, beneath the fuel tank, and above the pair of seat frames.

According to this arrangement, at least a portion of the electrical component unit is disposed in front of the cross member in the side view of the vehicle. Further, at least a portion of the electrical component unit is disposed beneath the fuel tank. Furthermore, at least a portion of the electrical component unit is disposed at a position higher than those of the pair of seat frames. This arrangement accordingly ensures that access to the electrical component unit from a lateral side of the vehicle is not easily blocked by the other components, and thereby the saddle type vehicle has high maintainability. Further, since at least a portion of the electrical component unit is disposed at a position higher than those of the seat frames, the vertical distance from the engine to the electrical component unit increases, so that heat from the engine is less likely to be transferred to the electrical component unit.

In an aspect of the present teaching, the upper surface of the cross member may be inclined such that the front end of the upper surface is positioned higher than the rear end of the upper surface, and at least a portion of the upper surface of the cross member may be disposed at a position higher than those of the pair of seat frames.

According to this arrangement, the upper surface of the cross member is inclined rearward, and at least a portion of the upper surface is disposed at a position higher than those of the pair of seat frames. This can ensure a space to be used for disposing the electrical component unit in front of the cross member and at a position higher than those of the pair of seat frames.

In an aspect of the present teaching, at least a portion of the electrical component unit may be disposed beneath the tank portion.

According to this arrangement, at least a portion of the electrical component unit is disposed beneath the tank portion of the fuel tank so as not to overlap the tank portion in the side view. It is therefore not necessary to provide a large recessed portion in the bottom surface of the fuel tank for disposing the electrical component unit. This can improve the formability of the bottom surface of the fuel tank, resulting in a reduction in the cost of the saddle type vehicle. Further, since at least a portion of the electrical component unit is disposed beneath the tank portion of the fuel tank, it is easy to access the electrical component unit.

In an aspect of the present teaching, the electrical component unit may include a harness mounting portion disposed at a position lower than that of the fuel tank.

According to this arrangement, the harness mounting portion to mount a harness thereon is provided in the electrical component unit. The harness mounting portion is disposed at a position lower than that of the fuel tank so as not to overlap the fuel tank in the side view. Therefore, the fuel tank will not interfere with the mounting and dismounting of the harness onto/from the harness mounting portion. This can improve the workability of mounting and dismounting the harness.

In an aspect of the present teaching, the harness mounting portion may be disposed at a position higher than those of the pair of seat frames.

According to this arrangement, the harness mounting portion to mount a harness thereon is disposed at a position higher than those of the pair of seat frames so as not to overlap the pair of seat frames in the side view. Therefore, the pair of seat frames will not interfere with the mounting and dismounting of the harness onto/from the harness mounting portion. This can improve the workability of mounting and dismounting the harness.

In an aspect of the present teaching, the saddle type vehicle may further include a harness extending toward the electrical component unit through a lateral space of the pair of seat frames and coupled to the electrical component unit.

According to this arrangement, the harness extends in a manner passing by the pair of seat frames toward the electrical component unit. Accordingly, the posture of the harness is less likely to be limited by the other components including the pair of seat frames. This can prevent the harness from being bent at a small curvature radius.

In an aspect of the present teaching, the saddle type vehicle may further include a coupler detachably coupling the harness to the electrical component unit.

According to this arrangement, the coupler is attached to an end portion of the harness, and the harness is coupled to the electrical component unit via the coupler. The coupler is attachable and detachable to/from the electrical component unit. It is therefore easy to attach and detach the harness to/from the electrical component unit.

In an aspect of the present teaching, the fuel tank may further include a mount bracket fixed to the cross member. In this case, the mount bracket may extend downward from the bottom surface of the fuel tank.

According to this arrangement, the mount bracket of the fuel tank extends downward from the bottom surface of the fuel tank and is fixed to the cross member. Compared to the case of mounting the hollow tank portion that stores fuel therein onto the cross member, it is easier to mount and dismount the fuel tank onto/from the cross member. Further, the tank portion can be disposed at a higher position than in the case of mounting the tank portion onto the cross member, whereby it is possible to ensure a larger space to be used for disposing the electrical component unit. It is therefore not necessary to provide a large recessed portion in the bottom (lower) surface of the fuel tank for housing of the electrical component unit. This can improve the formability of the bottom surface of the fuel tank, resulting in a reduction in the cost of the vehicle.

In an aspect of the present teaching, the electrical component unit may be disposed over the air cleaner.

According to this arrangement, the electrical component unit is disposed over the air cleaner. The air cleaner is disposed behind the engine and below the seat frames. Further, since air to be supplied to the engine flows through the air cleaner, the air cleaner has a temperature constantly kept lower than that of the engine. As a result, heat from the engine is blocked by the air cleaner having a lower temperature so as to be much less likely to be transferred to the electrical component unit. It is therefore possible to reliably prevent the electrical component unit from being heated.

In an aspect of the present teaching, the front edge of the electrical component unit may be partially disposed, in the side view of the vehicle, between the lower edge of the fuel tank and the upper edge of the seat frames. The front edge of the electrical component unit may be entirely disposed, in the side view of the vehicle, between the lower edge of the tank portion and the upper edge of the seat frames. According to this arrangement, since an exposed area of the electrical component unit in the side view of the vehicle increases and access to the electrical component unit become easier, the maintainability of the saddle type vehicle can be improved.

In an aspect of the present teaching, the rear edge of the electrical component unit may be partially disposed, in the side view of the vehicle, between the lower edge of the fuel tank and the upper edge of the seat frames. The rear edge of the electrical component unit may be entirely disposed, in the side view of the vehicle, between the lower edge of the tank portion and the upper edge of the seat frames. According to this arrangement, the electrical component unit is exposed, in the side view of the vehicle, at an increased area to become easy to access, which further improves the maintainability of the saddle type vehicle.

The above and other objects, features, and advantages of the present invention will become more apparent from the following description of preferred embodiments with reference to the accompanying drawings.

### BRIEF DESCRIPTION OF THE DRAWINGS

FIG. 1 is a side view of a motorcycle according to a preferred embodiment of the present teaching.
FIG. 2 is a side view of the motorcycle with exterior components and the like being dismounted.
FIG. 3 is a plan view of the motorcycle with exterior components and the like being dismounted.
FIG. 4 is a plan view showing seat frames, a rear cross member, and a front cross member.
FIG. 5 is a side view showing the seat frames, the rear cross member, and the front cross member.
FIG. 6 is a side view showing a battery box and an electrical component unit mounted on a vehicle body frame.
FIG. 7 is a plan view showing the battery box, the electrical component unit, and an air cleaner mounted on the vehicle body frame.
FIG. 8 is a side view illustrating a connecting state of a fuel tank and the rear cross member.
FIG. 9 is a partial cross-sectional view illustrating the connecting state of the fuel tank and the rear cross member.
FIG. 10 is a perspective view showing the electrical component unit mounted on the vehicle body frame.
FIG. 11 is a plan view showing the electrical component unit mounted on the vehicle body frame.

### DETAILED DESCRIPTION OF THE PREFERRED EMBODIMENTS

The front-rear, up-down (upper/lower), and left-right directions in the following description are defined on the basis of a viewpoint of a forward-facing rider of the motorcycle 1, which is an example of a saddle type vehicle, in a reference posture in which the motorcycle 1 travels straight ahead on a horizontal plane. The left-right direction corresponds to a vehicle width direction.

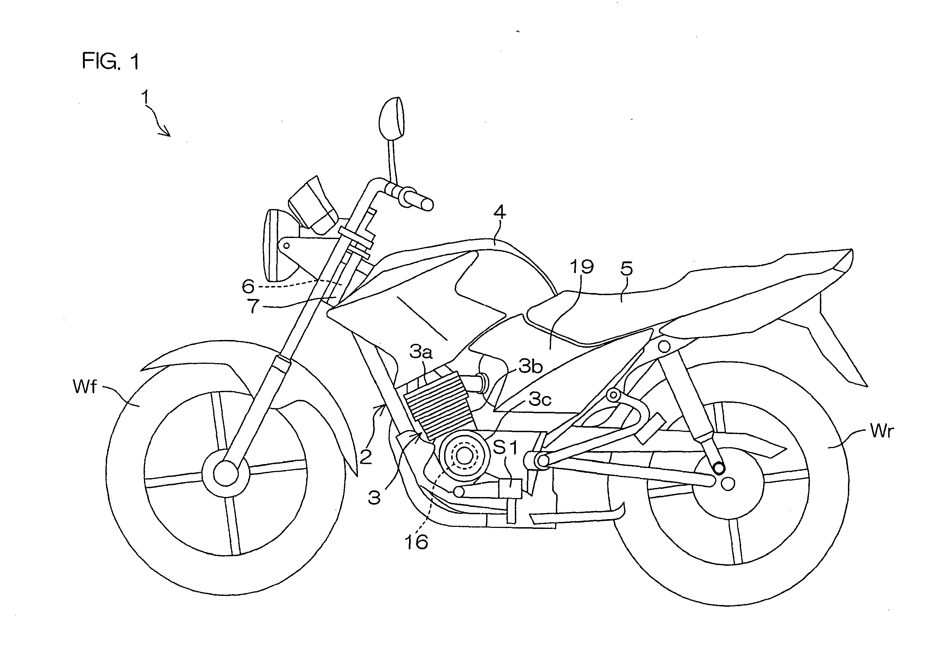

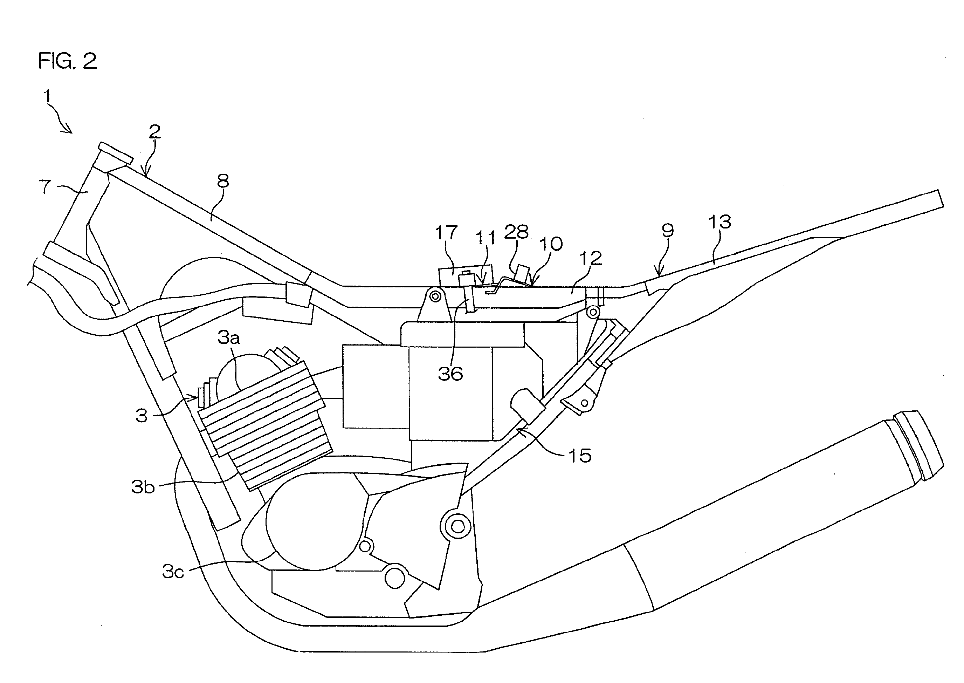

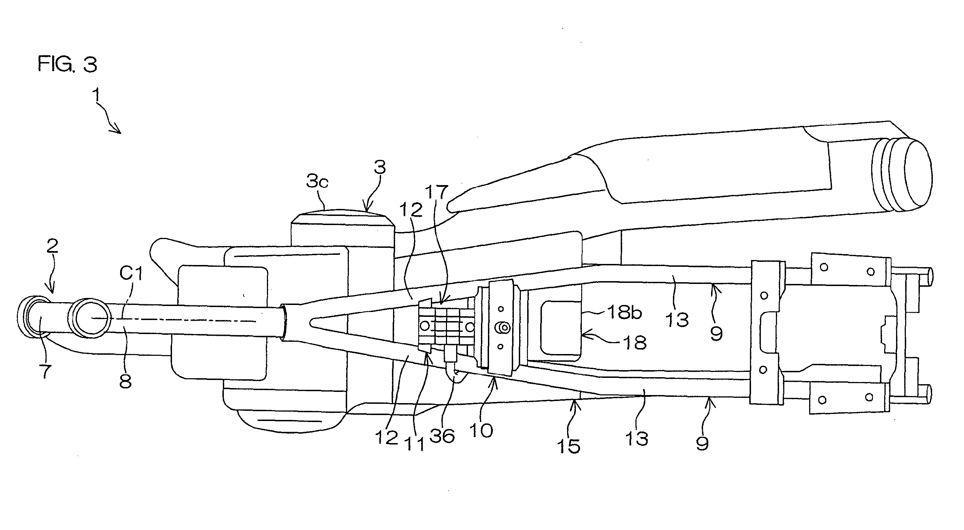

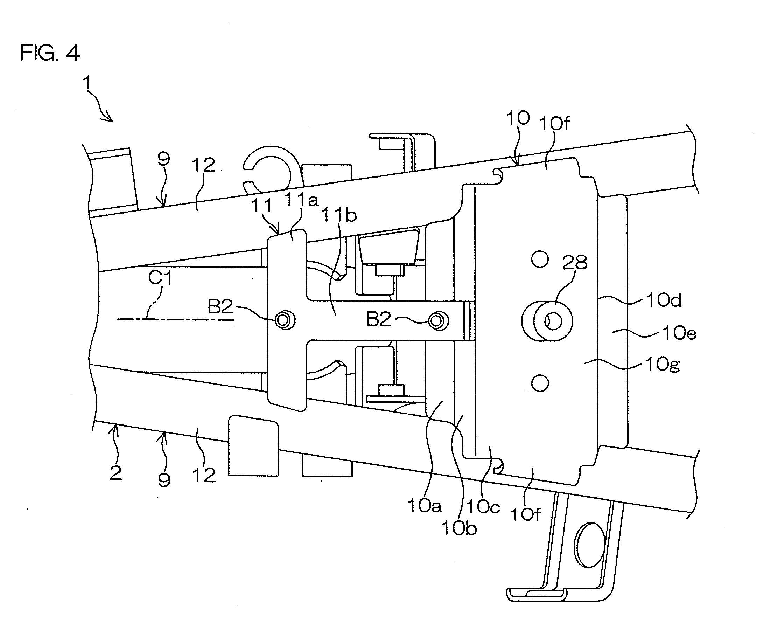

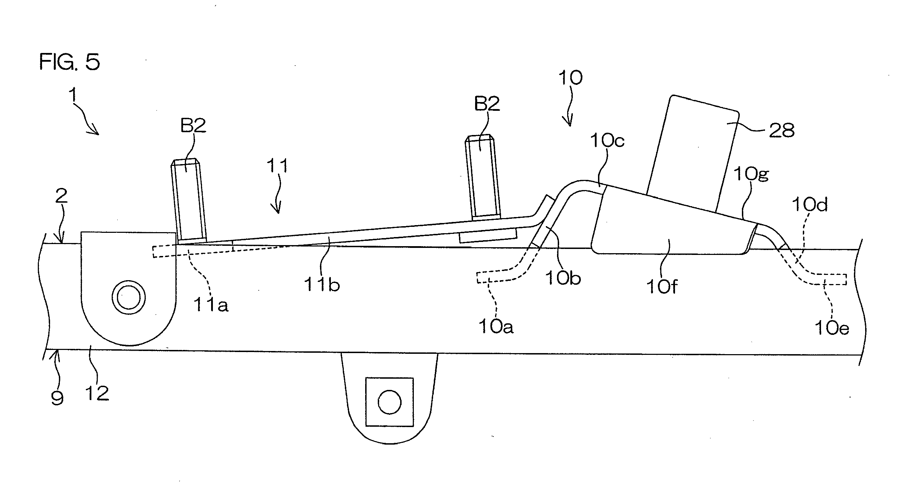

FIG. 1 is a side view of the motorcycle 1 according to a preferred embodiment of the present teaching. FIG. 2 is a side view of the motorcycle 1 with exterior components and the like being dismounted. FIG. 3 is a plan view of the motorcycle 1 with exterior components and the like being dismounted. FIG. 4 is a plan view showing seat frames 9, a rear cross member 10, and a front cross member 11. FIG. 5 is a side view showing the seat frames 9, the rear cross member 10, and the front cross member 11.

As shown in FIG. 1, the motorcycle 1 includes a cradle type vehicle body frame 2, a front wheel Wf and a rear wheel Wr held rotatably on the vehicle body frame 2, and an engine 3 that produces power required for the motorcycle 1 to travel. The motorcycle 1 further includes a fuel tank 4 that stores therein fuel to be supplied to the engine 3 (internal combustion engine), a seat 5 supported on the vehicle body frame 2, and steps S1 on which the feet of a driver sitting on the seat 5 are to be put.

As shown in FIG. 1, the engine 3 is disposed beneath the fuel tank 4. The engine 3 includes a cylinder head 3a defining a combustion chamber, a cylinder block 3b defining a cylinder with the cylinder head 3a, and a crankcase 3c housing therein a crankshaft connected to a piston that is disposed in the cylinder. The cylinder head 3a is fixed to an upper end portion of the cylinder block 3b, while the crankcase 3c is fixed to a lower end portion of the cylinder block 3b. The steps S1 are fixed to the engine 3.

As shown in FIG. 1, the seat 5 is disposed at a position higher than that of the engine 3. The seat 5 is disposed at the rear of the fuel tank. The front end portion of the seat 5 has a U-shaped configuration opening forward in the plan view of the motorcycle 1, having a pair of left and right leading end portions. The front end portion of the seat 5 is disposed along the rear end portion of the fuel tank 4. The pair of left and right leading end portions of the seat 5 are disposed, respectively, on the right and left sides of the fuel tank 4. The rear end portion of the fuel tank 4 thus overlaps the front end portion of the seat 5 in the side view of the motorcycle 1.

As shown in FIG. 2, the vehicle body frame 2 includes a head pipe 7 in which a steering shaft 6 (see FIG. 1) is inserted, a main frame 8 extending rearward and downward from the head pipe 7, and a pair of left and right seat frames 9 extending rearward from the main frame 8. As shown in FIG. 3, the vehicle body frame 2 further includes a rear cross member 10 connecting the pair of seat frames 9 and a front cross member 11 connecting the pair of seat frames 9 in front of the rear cross member 10 (see also FIG. 4). The rear cross member 10 is an example of a cross member according to a preferred embodiment of the present teaching. The engine 3 is disposed beneath the main frame 8. The main frame 8 extends along a center C1 in the width direction (a vertical plane passing through the center of the vehicle body frame 2 in the width direction) over the engine 3.

As shown in FIG. 3, the pair of seat frames 9 are disposed at positions higher than that of the engine 3. The pair of seat frames 9 are disposed on the right and left sides of the width center C1. The pair of seat frames 9 are also disposed symmetrically with respect to the width center C1. The pair of seat frames 9 are disposed at the same height in a manner spaced in the width direction of the vehicle. The pair of seat frames 9 include a pair of left and right inclined frames 12 extending rearward from the main frame 8 and a pair of left and right parallel frames 13 extending rearward, respectively, from the rear ends of the pair of inclined frames 12. The pair of inclined frames 12 are inclined in a V-shaped manner in the plan view of the motorcycle 1, while the pair of parallel frames 13 are opposed in parallel to each other in a manner spaced in the width direction of the vehicle. As shown in FIG. 2, the inclined frames 12 are horizontal in a side view, while the parallel frames 13 are inclined in a side view such that the front ends of the parallel frames 13 are positioned lower than the rear ends of the parallel frames 13. The inclined frames 12 may be inclined in a side view such that the front ends of the inclined frames 12 are positioned lower than the rear ends of the inclined frames 12.

As shown in FIG. 4, the pair of inclined frames 12 are connected to each other via the rear cross member 10. Similarly, the pair of inclined frames 12 are connected to each other via the front cross member 11. The rear cross member 10 extends from one of the inclined frames 12 to the other, and the front cross member 11 also extends from one of the inclined frames 12 to the other in front of the rear cross member 10. The rear cross member 10 and the front cross member 11 are fixed to the seat frames 9 by welding, for example. The method for fixation between the rear cross member 10 and the seat frames 9 is not limited to welding, and another method may be applied, such as bolting. The same applies to the front cross member 11.

As shown in FIG. 5, the front cross member 11 is disposed in front of the rear cross member 10. The front cross member 11 extends forward and downward from the rear cross member 10. The rear cross member 10 and the front cross member 11 are each composed of a pressed steel plate. The rear cross member 10 has, for example, a downward-opened box shape, while the front cross member 11 has, for example, a T shape in a plan view (see FIG. 4). Without being limited to the box shape, the rear cross member 10 may be formed in a non-box shape. Similarly, without being limited to the T shape in a plan view, the front cross member 11 may also be formed in a non-T shape in a plan view. As shown in FIG. 4, the rear cross member 10 has a shape symmetrical with respect to the width center C1, the center (in the width direction of the vehicle) of the rear cross member 10 being positioned on the width center C1. Similarly, the front cross member 11 has a shape symmetrical with respect to the width center C1, the center of the front cross member 11 being positioned on the width center C1.

As shown in FIG. 5, the rear cross member 10 includes a front end portion 10a extending in the front-rear direction, a front inclined portion 10b extending rearward and upward from a rear end portion of the front end portion 10a, and an upper portion 10c extending rearward and downward from an upper end portion of the front inclined portion 10b. The rear cross member 10 further includes a rear inclined portion 10d extending rearward and downward from a rear end portion of the upper portion 10c, a rear end portion 10e extending rearward from a lower end portion of the rear inclined portion 10d, and a pair of left and right side portions 10f extending downward from left and right side portions of the upper portion 10c, respectively. The front end portion 10a and the rear end portion 10e are disposed between the pair of seat frames 9 and fixed to the seat frames 9 by welding, for example. The pair of side portions 10f are disposed, respectively, over the pair of seat frames 9 and also fixed to the seat frames 9 by welding, for example. The upper portion 10c is disposed at a position higher than those of the pair of seat frames 9. The rear cross member 10 accordingly protrudes upward from the seat frames 9. The upper surface 10g of the upper portion 10c (upper surface of the rear cross member 10) is inclined such that the front end is positioned higher than the rear end. The front end portion of the upper surface 10g constitutes an upper end portion of the rear cross member 10.

As shown in FIG. 4, the front cross member 11 includes a lateral plate portion 11a extending in the width direction of the vehicle and a longitudinal plate portion 11b extending rearward from a central portion (in the width direction of the vehicle) of the lateral plate portion 11 a. The right and left end portions of the lateral plate portion 11 a are fixed to the pair of seat frames 9 by welding, for example. The rear end portion of the longitudinal plate portion 11b is fixed to the rear cross member 10 by welding, for example. The rear end portion of the front cross member 11 is thus fixed to the rear cross member 10. The rear end portion of the longitudinal plate portion 11b overlaps the rear cross member 10 in a plan view. As shown in FIG. 5, the longitudinal plate portion 11b is inclined such that the front end is positioned lower than the rear end. The rear end portion of the longitudinal plate portion 11b is disposed at a position lower than that of the upper end portion of the rear cross member 10. The rear end portion of the longitudinal plate portion 11b constitutes an upper end portion of the front cross member 11. Accordingly, the front cross member 11 is disposed at a position lower than that of the upper end portion of the rear cross member 10.

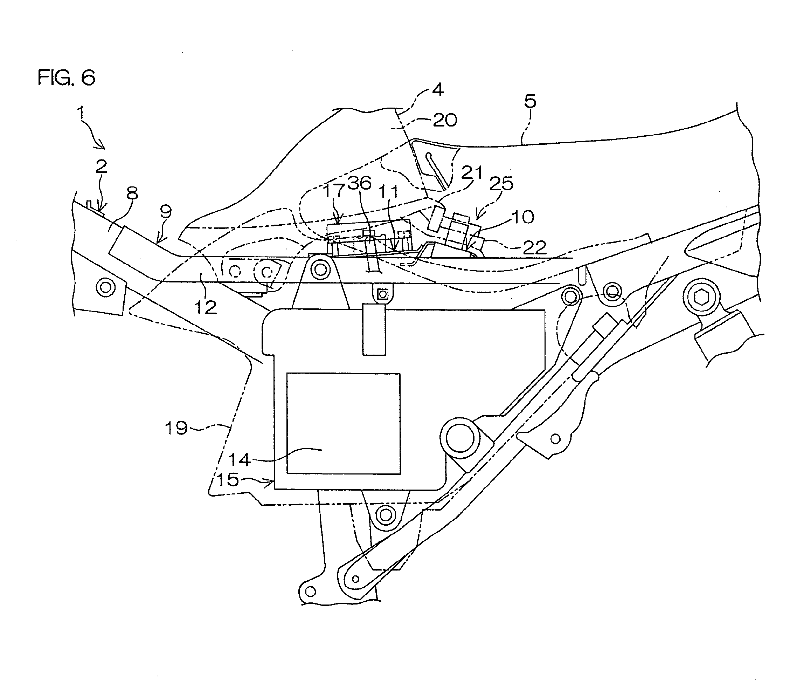

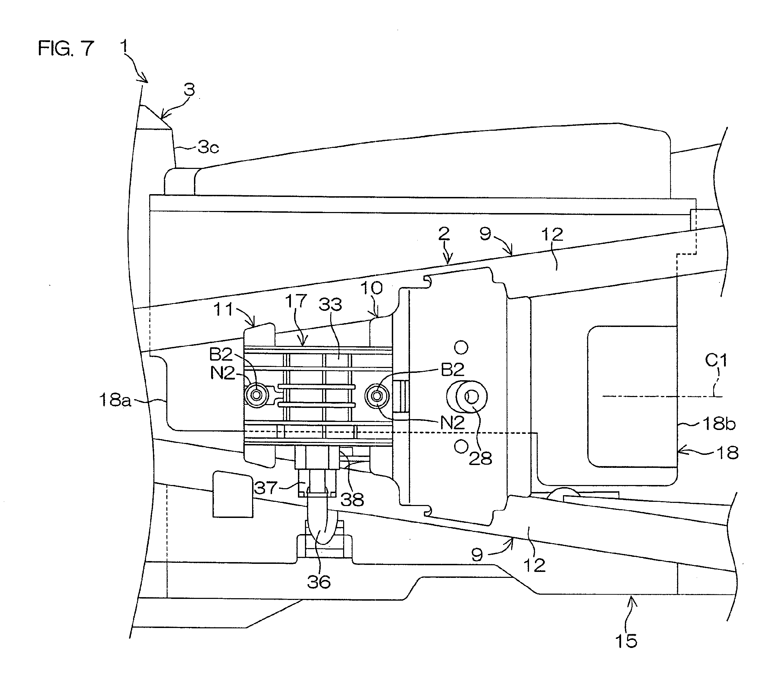

FIG. 6 is a side view showing a battery box 15 and an electrical component unit 17 mounted on the vehicle body frame 2. FIG. 7 is a plan view showing the battery box 15, the electrical component unit 17, and an air cleaner 18 mounted on the vehicle body frame 2.

As shown in FIG. 6, the motorcycle 1 includes a battery box 15 housing therein a battery 14 and an electrical component unit 17 disposed on an electric circuit connecting a generator 16 (see FIG. 1) included in the engine 3 and the battery 14. As shown in FIG. 7, the motorcycle 1 further includes an air cleaner 18 that cleans air to be supplied to the engine 3.

As shown in FIG. 7, the air cleaner 18 and the battery box 15 are arranged in the width direction of the vehicle (in the up-down direction in FIG. 7). The air cleaner 18 and the battery box 15 are disposed at the rear of the engine 3. The right seat frame 9 is disposed over the air cleaner 18, while the left seat frame 9 is disposed over the battery box 15. The air cleaner 18 has a width (distance in the width direction of the vehicle) greater than that of the battery box 15. The air cleaner 18 intersects with the width center C1. As shown in FIG. 6, the battery box 15 is covered from the left with a side cover 19 detachably mounted on the vehicle body frame 2. Similarly, the air cleaner 18 is covered from the right with a side cover 19 detachably mounted on the vehicle body frame 2.

As shown in FIG. 7, the electrical component unit 17 is disposed on the front cross member 11. The front cross member 11 is disposed over the air cleaner 18. Accordingly, the electrical component unit 17 is disposed over the air cleaner 18. The air cleaner 18 is disposed beneath the seat frames 9. The front end portion 18a of the air cleaner 18 is disposed anterior to the front cross member 11 and the electrical component unit 17, while the rear end portion 18b of the air cleaner 18 is disposed posterior to the rear cross member 10. Similarly, the front end portion of the battery box 15 is disposed anterior to the front cross member 11 and the electrical component unit 17, while the rear end portion of the battery box 15 is disposed posterior to the rear cross member 10.

As shown in FIG. 6, the electrical component unit 17 is disposed posterior to the front end of the seat 5 indicated by the alternate long and two short dashed lines in FIG. 6. The electrical component unit 17 is positioned over the battery box 15 in the side view of the vehicle. This provides improved vehicle-lateral access to the electrical component unit 17 and the battery 14. Further, since the electrical component unit 17 is positioned over the battery box 15 in the side view of the vehicle, the distance from the electrical component unit 17 to the battery 14 can be reduced, whereby it is possible to reduce the length of a harness connecting the electrical component unit 17 and the battery 14.

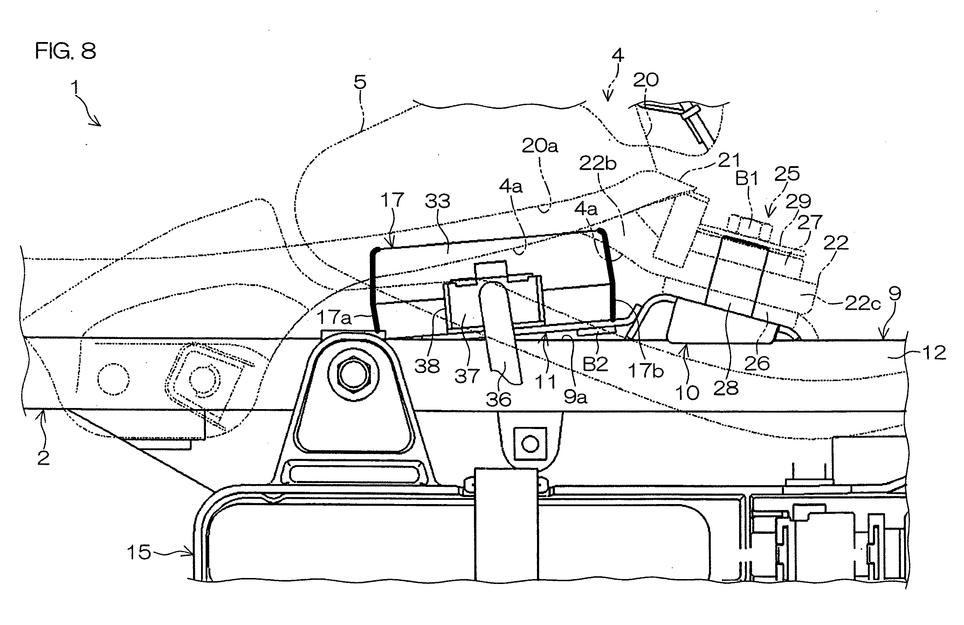

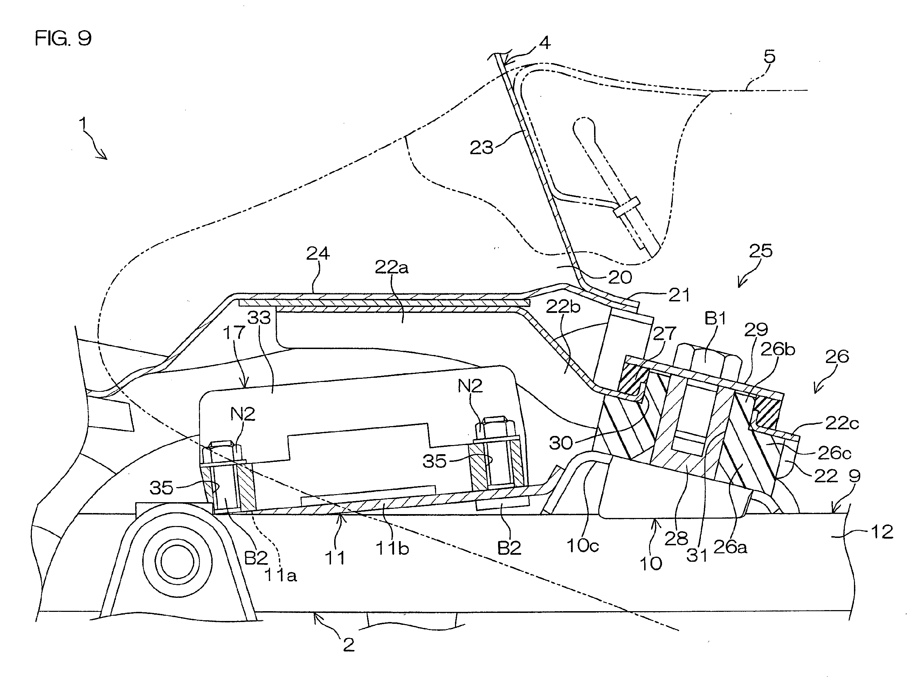

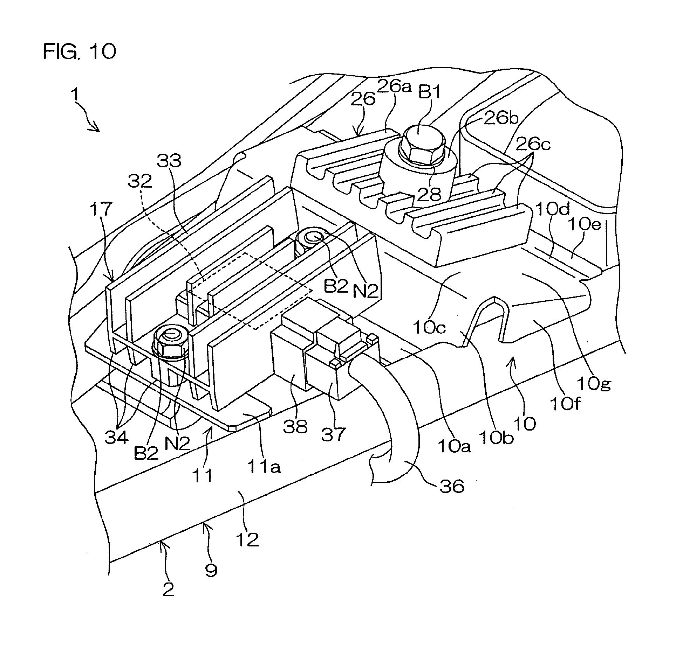

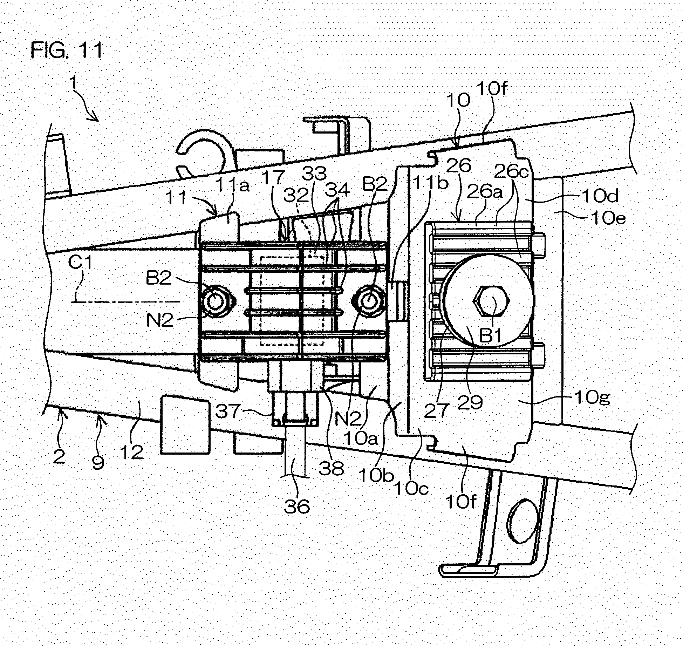

Fig. 8 is a side view illustrating a connecting state of the fuel tank 4 and the rear cross member 10. FIG. 9 is a partial cross-sectional view illustrating the connecting state of the fuel tank 4 and the rear cross member 10. FIG. 10 is a perspective view showing the electrical component unit 17 mounted on the vehicle body frame 2. FIG. 11 is a plan view showing the electrical component unit 17 mounted on the vehicle body frame 2.

As shown in FIG. 8, the fuel tank 4 includes a hollow tank portion 20 that stores fuel therein, a joint portion 21 disposed around the tank portion 20, and a mount bracket 22 extending rearward from a rear end portion of the tank portion 20. That is, the fuel tank 4 includes a hollow tank body at least a portion of which disposed at a position higher than that of the seat frames 9 and the mount bracket 22 extending rearward from the tank body. The tank body includes the tank portion 20 and the joint portion 21.

As shown in FIG. 8, the front edge 17a of the electrical component unit 17 (indicated by the thick line in FIG. 8) is entirely disposed, in the side view of the vehicle, between the lower edge 20a of the tank portion 20 and the upper edge 9a of the seat frames 9. The front edge 17a is partially disposed, in the side view of the vehicle, between the lower edge 4a of the fuel tank 4 and the upper edge 9a of the seat frames 9. Similarly, the rear edge 17b of the electrical component unit 17 (indicated by the thick line in FIG. 8) is entirely disposed, in the side view of the vehicle, between the lower edge 20a of the tank portion 20 and the upper edge 9a of the seat frames 9. The rear edge 17b is partially disposed, in the side view of the vehicle, between the lower edge 4a of the fuel tank 4 and the upper edge 9a of the seat frames 9.

As shown in FIG. 9, the fuel tank 4 further includes a downward-opened cup-like upper member 23 and a lower member 24 closing the opening of the upper member 23. The upper member 23 and the lower member 24 are each composed of a pressed steel plate. The upper member 23 is disposed over the lower member 24. The edge portion of the upper member 23 is bonded air- and liquid-tightly to the edge portion of the lower member 24. The tank portion 20 includes the upper member 23 and the lower member 24, and the joint portion 21 includes the edge portions of the upper member 23 and the lower member 24. Fuel is stored in the space between the upper member 23 and the lower member 24.

As shown in FIG. 9, the fuel tank 4 is supported on the vehicle body frame 2 via the mount bracket 22 and the rear cross member 10. The mount bracket 22 extends downward from the lower surface of the tank portion 20, that is, the lower surface of the lower member 24. The mount bracket 22 also extends from under the tank portion 20 over the electrical component unit 17 to a position over the rear cross member 10. At least a portion of the electrical component unit 17 is disposed over the inclined frames 12 of the seat frames 9. The mount bracket 22 is composed of a plate having a downward-opened U-shaped transverse section (cross section cut by a plane parallel with the width direction of the vehicle). Without being limited to the U shape, the cross section of the mount bracket 22 may have a non-U shape.

As shown in FIG. 9, the mount bracket 22 includes a fixed portion 22a fixed to the tank portion 20, an inclined portion 22b extending rearward and downward from a rear end portion of the fixed portion 22a, and a mount portion 22c extending rearward and downward from a rear end portion of the inclined portion 22b. The upper surface of the inclined portion 22b is inclined such that the front end is positioned higher than the rear end. Similarly, the upper surface of the mount portion 22c is inclined such that the front end is positioned higher than the rear end. The angle of inclination of the inclined portion 22b with respect to a horizontal plane is greater than the angle of inclination of the mount portion 22c with respect to the horizontal plane. The mount portion 22c is disposed posterior to the inclined portion 22b. The mount portion 22c is disposed over the upper portion 10c of the rear cross member 10.

As shown in FIG. 9, the motorcycle 1 includes a mount structure 25 with which the rear end portion of the mount bracket 22, that is, the mount portion 22c is mounted on the rear cross member 10. The mount structure 25 includes a main damper 26 supporting the mount portion 22c and a sub-damper 27 holding the mount portion 22c vertically with the main damper 26. The mount structure 25 further includes a sleeve 28 holding the main damper 26, an urging plate 29 pressing the sub-damper 27 against the mount portion 22c, and a bolt B1 fixing the urging plate 29 to the sleeve 28. The main damper 26 and the sub-damper 27 are each composed of an elastic material such as rubber or resin.

As shown in FIG. 10, the main damper 26 is disposed on the rear cross member 10. The front end portion of the main damper 26 is disposed on the front end portion of the upper portion 10c, while the rear end portion of the main damper 26 is disposed on the rear end portion of the upper portion 10c. As shown in FIG. 11, the main damper 26 has a shape symmetrical with respect to the width center C1, the center of the main damper 26 being positioned on the width center C1. The main damper 26 has a width smaller than that of the rear cross member 10. Accordingly, the right and left end portions of the rear cross member 10 are disposed laterally outside of the main damper 26.

As shown in FIG. 10, the main damper 26 includes a plate portion 26a disposed on the rear cross member 10 and a cylindrical portion 26b protruding upward from the plate portion 26a. The plate portion 26a has a rectangular shape extending in the width direction of the vehicle. The plate portion 26a includes multiple protrusions 26c provided thereon. The protrusions 26c extend in the front-rear direction. The multiple protrusions 26c are disposed parallel to each other in a manner spaced in the width direction of the vehicle. As shown in FIG. 9, the mount portion 22c is disposed on the multiple protrusions 26c. The cylindrical portion 26b is inserted in a through hole 30 penetrating the mount portion 22c in the thickness direction. The cylindrical portion 26b protrudes upward from the mount portion 22c.

As shown in FIG. 9, the main damper 26 is formed with an installation hole 31 extending along the central axis of the cylindrical portion 26b. The installation hole 31 penetrates the main damper 26 in the thickness direction. The sleeve 28 is inserted in the installation hole 31. The upper end portion of the sleeve 28 is disposed at a position higher than that of the mount portion 22c. The upper end portion of the cylindrical portion 26b surrounds the upper end portion of the sleeve 28 over the mount portion 22c. The sleeve 28 extends upward from the upper portion 10c of the rear cross member 10. The lower end portion of the sleeve 28 is fixed to the rear cross member 10. The main damper 26 is held on the sleeve 28. Accordingly, the main damper 26 is held on the rear cross member 10 via the sleeve 28.

As shown in FIG. 9, the sub-damper 27 surrounds the upper end portion of the cylindrical portion 26b over the mount portion 22c. The urging plate 29 is disposed over the sleeve 28, the cylindrical portion 26b, and the sub-damper 27. The bolt B1 penetrates the urging plate 29, and the head portion of the bolt B1 is disposed on the urging plate 29. The bolt B1 is threaded into the female thread portion formed on the inner peripheral portion of the sleeve 28. The urging plate 29 is held between the head portion of the bolt B1 and the upper end face of the sleeve 28 so as to be fixed to the sleeve 28 and press the sub-damper 27 against the mount portion 22c. Accordingly, the rear end portion of the mount bracket 22 is fixed to the vehicle body frame 2 via the mount structure 25.

As shown in FIG. 8, the electrical component unit 17 is disposed beneath the fuel tank 4. The lower end portion of the electrical component unit 17 is disposed at a position lower than that of the tank portion 20. The electrical component unit 17 may be entirely or partially disposed at a position lower than that of the tank portion 20. FIG. 8 shows a case where the electrical component unit 17 is entirely disposed at a position lower than that of the tank portion 20. Since the lower end portion of the electrical component unit 17 is disposed at a position lower than that of the tank portion 20, at least a portion of the electrical component unit 17 does not overlap the fuel tank 4 in a side view in any of the cases above.

As shown in FIG. 10, the electrical component unit 17 includes a regulator 32 that regulates the voltage of power generated by the generator 16 (see FIG. 1) and a case 33 that houses the regulator 32 therein. Power from the generator 16 is supplied to the battery 14 via the regulator 32. The case 33 includes a plurality of cooling fins 34. Heat generated in the devices, including the regulator 32, in the case 33 is to be released out of the electrical component unit 17 through the cooling fins 34. The regulator 32 is an example of an electrical component. Without being limited to the regulator 32, the electrical component may be a rectifier. The electrical component may be a combination of the regulator 32 and the rectifier or an ECU (Electronic Control Unit) that controls devices included in the motorcycle 1. It will be understood that devices other than the regulator 32, the rectifier, and the ECU may be employed as electrical components.

As shown in FIG. 8, the electrical component unit 17 is disposed on the front cross member 11. The electrical component unit 17 is disposed in front of the rear cross member 10. The electrical component unit 17 is disposed at a position higher than those of the pair of seat frames 9. As shown in FIG. 11, the electrical component unit 17 (case 33) has a shape symmetrical with respect to the width center C1, the center (in the width direction of the vehicle) of the electrical component unit 17 being positioned on the width center C1. The electrical component unit 17 is disposed between the pair of seat frames 9 in a plan view. The rear end portion of the electrical component unit 17 overlaps the front end portion 10a of the rear cross member 10 in a plan view. Accordingly, the electrical component unit 17 is disposed in front of and in the vicinity of the rear cross member 10.

As shown in FIG. 11, the electrical component unit 17 is fixed detachably to the front cross member 11 using two pairs of bolts B2 and nuts N2. The pairs of bolts B2 and nuts N2 are an example of a fixing member. The two pairs of bolts B2 and nuts N2 are disposed on the width center C1 in a manner spaced in the front-rear direction. As shown in FIG. 9, the front bolt B2 vertically penetrates the lateral plate portion 11 a of the front cross member 11, while the rear bolt B2 vertically penetrates the longitudinal plate portion 11b of the front cross member 11. The head portions of the bolts B2 are disposed under the front cross member 11, and the male screw portions of the bolts B2 protrude upward from the front cross member 11. The head portions of the bolts B2 are also fixed to the front cross member 11. Accordingly, the bolts B2 are fixed to the front cross member 11 in an inverted posture where the male screw portions are positioned higher than the head portions.

As shown in FIG. 9, the male screw portions of the bolts B2 are inserted in installation holes 35 provided in the case 33 of the electrical component unit 17. The installation holes 35 vertically penetrate the case 33, and the upper end portions of the bolts B2 protrude upward from the installation holes 35. The nuts N2 are threaded on the upper end portions of the respective bolts B2. The nuts N2 are disposed on the case 33. The case 33 and the front cross member 11 are fastened vertically using the two pairs of bolts B2 and nuts N2, whereby the electrical component unit 17 is fixed to the front cross member 11. When the electrical component unit 17 is mounted onto the front cross member 11, the case 33 is disposed on the front cross member 11 so that the two bolts B2 are inserted into the two respective installation holes 35. The nuts N2 are then threaded onto the respective bolts B2.

As shown in FIG. 10, the motorcycle 1 includes a harness 36, including multiple leads and a tubular insulator covering the multiple leads, and a coupler 37 detachably coupling the harness 36 to the electrical component unit 17. The electrical component unit 17 is connected to the generator 16 and the battery 14 via the harness 36. The coupler 37 is attached to an end portion of the harness 36 and disposed laterally to the electrical component unit 17. The electrical component unit 17 includes a harness mounting portion 38 to which the coupler 37 is attached. The harness mounting portion 38 is provided on a lateral side of the case 33. The end portion of the harness 36 is detachably mounted on the harness mounting portion 38 via the coupler 37. The end portion of the harness 36 may be coupled directly to the electrical component unit 17 without using the coupler 37.

As shown in FIG. 10, the end portion of the harness 36 is disposed around one of the seat frames 9. The end portion of the harness 36 bypasses the seat frame 9 from therebeneath to thereover. The harness 36 extends in a manner passing by the pair of seat frames 9 toward the electrical component unit 17. As shown in FIG. 8, the harness 36 overlaps the seat frames 9 in a side view. The harness mounting portion 38 is disposed at a position lower than that of the tank portion 20 so as not to overlap the fuel tank 4 in a side view. Further, the harness mounting portion 38 is disposed at a position higher than those of the seat frames 9 so as not to overlap the seat frames 9 in a side view.

As will be seen from a combination of FIGS. 1 and 8, the end portion of the harness 36 and the coupler 37 are covered with the seat 5 and the side cover 19 laterally to the vehicle body frame 2. When the seat 5 and the side cover 19 are dismounted from the vehicle body frame 2, the end portion of the harness 36 and the coupler 37 are exposed. This allows users to couple and decouple the harness 36 to/from the electrical component unit 17 by dismounting the seat 5 and the side cover 19 from the vehicle body frame 2. Further, the bolts B2, fixing the electrical component unit 17 to the front cross member 11, are covered from above with the fuel tank 4. This allows users to mount and dismount the electrical component unit 17 onto/from the front cross member 11 by dismounting the fuel tank 4, seat 5 and the side cover 19 from the vehicle body frame 2.

In the above-described preferred embodiment, the electrical component unit 17 is thus disposed in front of the rear cross member 10 according to a preferred embodiment of the present teaching. At least a portion of the electrical component unit 17 is disposed beneath the fuel tank 4. Further, at least a portion of the electrical component unit 17 is disposed at a position higher than those of the pair of seat frames 9. It is therefore easy to access the electrical component unit 17, which allows the motorcycle 1 to have high maintainability. Furthermore, the distance from the engine 3 to the electrical component unit 17 increases compared to that in conventional motorcycles, so that the electrical component unit 17 is less likely to be thermally influenced by the engine 3. This can prevent the electrical component unit 17 from reaching a high temperature.

Although the preferred embodiment of the present teaching has been described above, the present teaching is not limited to the content of the above-described preferred embodiment, and can be variously modified within the scope of the appended claims.

For example, the preferred embodiment above describes the case where the upper surface 10g of the rear cross member 10 is inclined rearward. However, the upper surface 10g of the rear cross member 10 may be inclined such that the front end is positioned lower than the rear end or may be horizontal.

The preferred embodiment above also describes the case where the harness mounting portion 38 is disposed at a position lower than that of the tank portion 20 so as not to overlap the fuel tank 4 in a side view. The preferred embodiment above further describes the case where the harness mounting portion 38 is disposed at a position higher than those of the seat frames 9 so as not to overlap the seat frames 9 in a side view. However, the harness mounting portion 38 may overlap the fuel tank 4 in a side view or may overlap the seat frames 9 in a side view. In this case, the harness mounting portion 38 may be provided on a lateral side of the case 33 or, alternatively, may not be provided on a lateral side but at a location such as a front end portion or a rear end portion of the case 33.

The preferred embodiment above also describes the case where the saddle type vehicle is a sport type motorcycle 1. However, the saddle type vehicle may be an off-road type motorcycle, or may be a moped. Moreover, the saddle type vehicle may not be only a motorcycle but also an all-terrain vehicle or a snowmobile.

## Claims

1. A saddle type vehicle (1) comprising:
a head pipe (7);
a main frame (8) extending rearward from the head pipe (7);
a pair of left and right seat frames (9) extending rearward from the main frame (8);
a cross member (10) connecting the pair of seat frames (9) to each other;
an engine including a cylinder head (3a) disposed at a position lower than those of the main frame (8) and the pair of seat frames (9);
an air cleaner (18) disposed at a rear of the cylinder head (3a) and below the pair of seat frames (9);
a fuel tank (4) including a hollow tank portion (20) arranged to store fuel therein, the fuel tank (4) disposed over the pair of seat frames (9), the fuel tank (4) supported on the cross member (10); and
an electrical component unit (17), **characterized in that**,
at least a portion of the cross member (10) is disposed at a position higher than those of the pair of seat frames (9), and
the electrical component unit (17) is disposed in a plan view of the vehicle, between a front end portion (18a) of the air cleaner (18) and a rear end portion (10e) of the cross member (10) in a front-rear direction of the vehicle and disposed, in a side view of the vehicle, between the tank portion (20) and the pair of seat frames (9) in an up-down direction of the vehicle.

2. A saddle type vehicle (1) according to claim 1, **characterized by** a seat (5) overlapping the electrical component unit (17) in the side view of the vehicle, the seat (5) is mountable and dismountable onto/from the pair of seat frames (9).

3. A saddle type vehicle (1) according to claim 1 or 2, **characterized in that** an upper surface (10g) of the cross member (10) is inclined such that a front end of the upper surface (10g) is positioned higher than a rear end of the upper surface (10g), and at least a portion of the upper surface (10g) is disposed at a position higher than those of the pair of seat frames (9).

4. A saddle type vehicle (1) according to any one of claims 1 to 3, **characterized in that** at least a portion of the electrical component unit (17) is disposed beneath the tank portion (20).

5. A saddle type vehicle (1) according to any one of claims 1 to 4, **characterized in that** the electrical component unit (17) includes a harness mounting portion (38) disposed at a position lower than that of the fuel tank (4).

6. A saddle type vehicle (1) according to claim 5, **characterized in that** the harness mounting portion (38) is disposed at a position higher than those of the pair of seat frames (9).

7. A saddle type vehicle (1) according to any one of claims 1 to 6, **characterized by** a harness (36) extending toward the electrical component unit (17) through a lateral space of the pair of seat frames (9) and coupled to the electrical component unit (17).

8. A saddle type vehicle (1) according to claim 7, **characterized by** a coupler (37) detachably coupling the harness (36) to the electrical component unit (17).

9. A saddle type vehicle (1) according to any one of claims 1 to 8, **characterized in that** the fuel tank (4) further includes a mount bracket (22) fixed to the cross member (10), and
the mount bracket (22) extends downward from a bottom surface of the fuel tank (4).

10. A saddle type vehicle (1) according to any one of claims 1 to 9, **characterized in that** the electrical component unit (17) is disposed over the air cleaner (18).

11. A saddle type vehicle (1) according to any one of claims 1 to 10, **characterized in that** the electrical component unit (17) is at least partially disposed, in the side view of the vehicle, between a lower edge (4a) of the fuel tank (4) and an upper edge (9a) of the seat frames (9) and/or between the lower edge (20a) of the hollow tank portion (20) and the upper edge (9a) of the seat frames (9).

12. A saddle type vehicle (1) according to claim 11, **characterized in that** a front edge (17a) of the electrical component unit (17) is partially disposed, in the side view of the vehicle, between the lower edge (4a) of the fuel tank (4) and the upper edge (9a) of the seat frames (9) and/or the front edge (17a) of the electrical component unit (17) is entirely disposed, in the side view of the vehicle, between the lower edge (20a) of the tank portion (20) and the upper edge (9a) of the seat frames (9).

13. A saddle type vehicle (1) according to any one of claims 11 or 12, **characterized in that** a rear edge (17b) of the electrical component unit (17) is partially disposed, in the side view of the vehicle, between the lower edge (4a) of the fuel tank (4) and the upper edge (9a) of the seat frames (9) and/or the rear edge (17b) of the electrical component unit (17) is entirely disposed, in the side view of the vehicle, between the lower edge (20a) of the tank portion (20) and the upper edge (9a) of the seat frames (9).

## Patentansprüche

1. Sattel-Typ-Fahrzeug (1) mit:
einem Lenkkopfrohr (7);
einem Hauptrahmen (8), der sich von dem Lenkkopfrohr (7) nach hinten erstreckt;
ein Paar von linken und rechten Sitzrahmen (9), die sich von dem Hauptrahmen (8) nach hinten erstrecken;
einem Querelement (10), welches das Paar von Sitzrahmen (9) miteinander verbindet;
einem Motor beinhaltend einen Zylinderkopf (3a) angeordnet an einer Position niedriger als die des Hauptrahmens (8) und des Paars von Sitzrahmen (9);
einem Luftfilter (18) angeordnet hinter dem Zylinderkopf (3a) und unter dem Paar von Sitzrahmen (9);
einen Kraftstofftank (4) beinhaltend einen hohlen Tankabschnitt (20) angeordnet, um Kraftstoff darin zu lagern, der Kraftstofftank (4) ist über dem Paar von Sitzrahmen (9) positioniert, der Kraftstofftank (4) ist auf dem Querelement (10) gelagert; und
einer Elektrik-Komponenten-Einheit (17), **dadurch gekennzeichnet, dass** zumindest ein Abschnitt des Querelements (10) an einer Position höher als die des Paars von Sitzrahmen (9) positioniert ist, und
die Elektrik-Komponenten-Einheit (17) ist in einer Draufsicht des Fahrzeugs zwischen einem Vorder-End-Abschnitt (18a) des Luftfilters (18) und einen Hinter-End-Abschnitt (10e) des Querelements (10) in einer Vor-Rück-Richtung des Fahrzeugs positioniert,
und in einer Seitenansicht des Fahrzeugs zwischen dem Tankabschnitt (20) und dem Paar von Sitzrahmen (9) in einer Oben-Unten-Richtung des Fahrzeugs positioniert.

2. Ein Sattel-Typ-Fahrzeug (1) gemäß Anspruch 1, **gekennzeichnet durch** einen Sitz (5) überlappend mit der Elektrik-Komponenten-Einheit (17) in einer Seitenansicht des Fahrzeugs, der Sitz (5) ist montierbar und demontierbar an/von dem Paar von Sitzrahmen (9).

3. Ein Sattel-Typ-Fahrzeug (1) gemäß Anspruch 1 oder 2, **dadurch gekennzeichnet, dass** eine obere Fläche (10g) des Querelements (10) geneigt ist, so dass ein vorderes Ende der oberen Fläche (10g) höher positioniert ist, als ein hinteres Ende der oberen Fläche (10g), und zumindest ein Abschnitt der oberen Fläche (10g) ist an einer Position höher als die des Paars von Sitzrahmen (9) positioniert.

4. Ein Sattel-Typ-Fahrzeug (1) gemäß einem der Ansprüche 1 bis 3, **dadurch gekennzeichnet, dass** zumindest ein Abschnitt der Elektrik-Komponenten-Einheit (17) unterhalb des Tankabschnitts (20) positioniert ist.

5. Ein Sattel-Typ-Fahrzeug (1) gemäß einem der Ansprüche 1 bis 4, **dadurch gekennzeichnet, dass** die Elektrik-Komponenten-Einheit (17) einen Kabelstrang-Montageabschnitt (38) beinhaltet, der an einer Position niedriger als die des Kraftstofftanks (4) positioniert ist.

6. Ein Sattel-Typ-Fahrzeug (1) gemäß Anspruch 5, **dadurch gekennzeichnet, dass** der Kabelstrang-Montageabschnitt (38) an einer Position höher als die des Paars von Sitzrahmen (9) positioniert ist.

7. Ein Sattel-Typ-Fahrzeug (1) gemäß einem der Ansprüche 1 bis 6, **gekennzeichnet durch** einen Kabelstrang (36), der sich zu der Elektrik-Komponenten-Einheit (17) durch einen Querraum des Paars von Sitzrahmen (9) erstreckt und zu der Elektrik-Komponenten-Einheit (17) gekoppelt ist.

8. Ein Sattel-Typ-Fahrzeug (1) gemäß Anspruch 7, **gekennzeichnet durch** einen Verbinder (37), der den Kabelstrang (36) zu der Elektrik-Komponenten-Einheit (17) lösbar koppelt.

9. Ein Sattel-Typ-Fahrzeug (1) gemäß einem der Ansprüche 1 bis 8, **dadurch gekennzeichnet, dass** der Kraftstofftank (4) weiterhin eine Montageklammer (2) beinhaltet, die an dem Querelement (10) fixiert ist, und die Montageklammer (22) erstreckt sich nach unten von einer unteren Fläche des Kraftstofftanks (4).

10. Ein Sattel-Typ-Fahrzeug (1) gemäß einem der Ansprüche 1 bis 9, **dadurch gekennzeichnet, dass** die Elektrik-Komponenten-Einheit (17) über dem Luftfilter (18) positioniert ist.

11. Ein Sattel-Typ-Fahrzeug (1) gemäß einem der Ansprüche 1 bis 10, **dadurch gekennzeichnet, dass** die Elektrik-Komponenten-Einheit (17) zumindest teilweise, in einer Seitenansicht des Fahrzeugs, zwischen einer unteren Kante (4a) des Kraftstofftanks (4) und einer oberen Kante (9a) der Sitzrahmen (9) und/oder zwischen der unteren Kante (20a) des hohlen Tankabschnitts (20) und der oberen Kante (9a) der Sitzrahmen (9) positioniert ist.

12. Ein Sattel-Typ-Fahrzeug (1) gemäß Anspruch 11, **dadurch gekennzeichnet, dass** eine vordere Kante (17a) der Elektrik-Komponenten-Einheit (17) teilweise, in der Seitenansicht des Fahrzeugs, zwischen der unteren Kante (4a) des Kraftstofftanks (4) und der oberen Kante (9a) der Sitzrahmen (9) positioniert ist und/oder die obere Kante (17a) der Elektrik-Komponenten-Einheit (17) ist im Gesamten, in einer Seitenansicht des Fahrzeugs, zwischen der unteren Kante (20a) des Kraftstofftanks (20) und der oberen Kante (9a) der Sitzrahmen (9) positioniert.

13. Ein Sattel-Typ-Fahrzeug (1) gemäß einem der Ansprüche (11 oder 12), **dadurch gekennzeichnet, dass** eine hintere Kante (17b) der Elektrik-Komponenten-Einheit (17) teilweise, in einer Seitenansicht des Fahrzeugs, zwischen der unteren Kante (4a) des Kraftstofftanks (4) und der oberen Kante (9a) der Sitzrahmen (9) positioniert ist und/oder die hintere Kante (17b) der Elektrik-Komponenten-Einheit (17) ist im Gesamten, in der Seitenansicht des Fahrzeugs, zwischen der unteren Kante (20a) des Tankabschnitts (20) und der oberen Kante (9a) der Sitzrahmen (9) positioniert.

## Revendications

1. Un véhicule de type à selle (1) comprenant:
un tuyau de tête (7);
un châssis (8) s'étendant vers l'arrière à partir du tuyau de tête (7);
une paire d'armatures des sièges droit et gauche (9) s'étendant vers l'arrière à partir du châssis (8);
un élément transversal (10) connectant la paire d'armatures des sièges (9) les unes aux autres;
un moteur comprenant une culasse (3a) dispose dans une position inférieure à celle du châssis (8) la paire d'armatures des sièges (9);
un purificateur d'air (18) disposé dans une partie arrière de la culasse (3a) et en dessous de la paire d'armatures des sièges (9);
un réservoir de carburant (4) incluant une partie de réservoir creux (20) arrange de façon à stocker le carburant dedans, le réservoir de carburant (4) dispose au-delà de la paire d'armatures des sièges (9), le réservoir de carburant (4) supporté sur l'élément transversal (10); et
une unité de composant électrique (17), **caractérisé en ce que**,
au moins une partie de l'élément transversal (10) soit disposé dans une position supérieure à celle de la paire d'armatures des sièges (9), et
l'unité de composant électrique (17) soit dispose selon un plan du véhicule, entre une partie d'extrémité avant (18a) du purificateur d'air (18) et une partie d'extrémité arrière (10e) de l'élément transversal (10) dans une direction avant-arrière du véhicule et disposé, selon un plan de coté du véhicule, entre une partie du réservoir (20) et la paire d'armatures des sièges (9) dans une haut-bas du véhicule.

2. Un véhicule de type à selle (1) selon la revendication 1, **caractérisé par** un siège (5) chevauchant l'unité de composant électrique (17) selon un plan de coté du véhicule, le siège (5) est montable et démontable sur ou à partir de la paire d'armatures des sièges (9).

3. Un véhicule de type à selle (1) selon la revendication 1 ou 2, **caractérisé en ce que** une surface supérieure (10g) de l'élément transversale (10) est inclinée de façon à ce que l'extrémité avant de la surface supérieure (10g) soit positionnée plus haute que l'extrémité arrière de la surface supérieure (10g), et qu'au moins une partie de la surface supérieure (10g) soit disposée plus haute que celle de la paire d'armatures de sièges (9).

4. Un véhicule de type à selle (1) selon une quelconque des revendications 1 à 3, **caractérisé en ce que** au moins une partie de l'unité de composant électrique (17) soit disposée en-dessous de la portion de réservoir (20).

5. Un véhicule de type à selle (1) selon une quelconque des revendications 1 à 4, **caractérisé en ce que** l'unité de composant électrique (17) inclut une partie de montage de faisceau (38) disposée dans une position plus basse que celle du réservoir de carburant (4).

6. Un véhicule de type à selle (1) selon la revendication 5, **caractérisé en ce que** la partie de montage de faisceau (38) soit disposée dans une position plus haute que celle de la paire d'armatures des sièges (9).

7. Un véhicule de type à selle (1) selon une quelconque des revendications 1 à 6, **caractérisé par** un faisceau (36) s'étendant en direction de l'unité de composant électrique (17) à travers un espace latéral de la paire d'armatures des sièges (9) et couplé à l'unité de composant électrique (17).

8. Un véhicule de type à selle (1) selon la revendication 7, **caractérisé par** un coupleur (37) couplant de manière amovible le faisceau (36) à l'unité de composant électrique (17).

9. Un véhicule de type à selle (1) selon une quelconque des revendications 1 à 8, **caractérisé en ce que** le réservoir de carburant (4) inclut en outre une équerre de montage (22) fixé à l'élément transversal (10), et l'équerre de montage (22) s'étend vers le bas depuis une surface inférieure du réservoir de carburant (4).

10. Un véhicule de type à selle (1) selon une quelconque des revendications 1 à 9, **caractérisé en ce que** l'unité de composant électrique (17) soit disposée au-dessus du purificateur d'air (18).

11. Un véhicule de type à selle (1) selon une quelconque des revendications 1 à 10, **caractérisé en ce que** l'unité de composant électrique (17) soit au moins partiellement disposée, selon une vue de coté du véhicule, entre un bord inférieur (4a) du réservoir de carburant (4) et un bord supérieur (9a) des armatures des sièges (9) et/ou entre le bord inférieur (20a) de la portion de réservoir creux (20) et un bord supérieur (9a) des armatures des sièges (9).

12. Un véhicule de type à selle (1) selon la revendication 11, **caractérisé en ce que** un bord avant (17a) de l'unité de composant électrique (17) soit disposé partiellement, selon une vue de coté du véhicule, entre un bord inférieur (4a) du réservoir de carburant (4) et un bord supérieur (9a) des armatures des sièges (9) et/ou le bord avant (17) soit entièrement disposé, selon une vue de coté du véhicule, entre le bord inférieur (20a) de la portion de réservoir creux (20) et un bord supérieur (9a) des armatures des sièges (9).

13. Un véhicule de type à selle (1) selon une quelconque des revendications 11 ou 12, **caractérisé en ce que** un bord arrière (17b) de l'unité de composant électrique (17) soit disposé partiellement, selon une vue de coté du véhicule, entre un bord inférieur (4a) du réservoir de carburant (4) et un bord supérieur (9a) des armatures des sièges (9) et/ou le bord arrière (17b) de l'unité de composant électrique (17) soit entièrement disposé, selon une vue de coté du véhicule, entre le bord inférieur (20a) de la portion de réservoir creux (20) et un bord supérieur (9a) des armatures des sièges (9).
